# EUROPEAN PATENT APPLICATION

(11) **EP 3 521 407 A1**
(43) Date of publication of application: **07.08.2019**
(21) Application number: 17856051.2
(22) Date of filing: 25.09.2017
(51) Int. Cl.: C10M 169/04, C10M 101/02, C10M 127/06, C10M 129/74, C10M 137/04, C10M 145/04, C10M 145/26, C10N 20/00, C10N 20/02, C10N 30/00, C10N 30/06, C10N 40/30

(54) **REFRIGERATING MACHINE OIL AND COMPOSITION FOR REFRIGERATING MACHINES**

(30) Priority: 30.09.2016 JP 2016194168
(71) Applicant: Idemitsu Kosan Co., Ltd, Tokyo 100-8321 (JP)
(72) Inventor: KANEKO, Masato, Ichihara-shi Chiba 299-0107 (JP); MATSUMOTO, Tomoya, Ichihara-shi Chiba 299-0107 (JP); NAKAJIMA, So, Ichihara-shi Chiba 299-0107 (JP)
(74) Representative: Hoffmann Eitle
(86) International application number: PCT/JP2017/034531
(87) International publication number: WO 2018/062099

(57) **Abstract**

The present invention relates to a refrigerator oil containing (A) a mineral oil having a kinematic viscosity at 40°C of 0.50 mm²/s or more and 8.00 mm²/s or less, (B) a polyphosphate ester-based compound, and (C) a dissolution aid for the component (B).

## Description

### Technical Field

The present invention relates to a refrigerator oil, a refrigerator oil composition containing the refrigerator oil, and a method for producing the refrigerator oil.

### Background Art

Refrigerators have a structure in which a mixture of a refrigerant and a refrigerator oil (hereinafter, the mixture is also referred to as "refrigerator oil composition") is circulated within a closed system, and the refrigerator oil is required to have compatibility with the refrigerant, stability, and lubricating performance.

For example, PTL 1 discloses a refrigerator oil containing, as a main component, at least one selected from a mineral oil, a synthetic alicyclic hydrocarbon compound and a synthetic aromatic hydrocarbon compound, containing a base oil having a kinematic viscosity at 40°C of 1 to 8 mm²/s, and applied to a refrigerator having a slide member formed of a specific material.

Also for example, PTL 2 discloses a refrigerator oil composition containing, as a main component, a specific ether compound and containing a base oil having a kinematic viscosity at 40°C of 1 to 8 mm²/s.

On the other hand, as a refrigerant, a hydrofluorocarbon (HFC) has become used in place of a hydrochlorofluorocarbon (HCFC) having a high environmental load. Among HFCs, a saturated hydrofluorocarbon (saturated HFC), such as R32 (difluoroethane) and R410A (a mixture of difluoroethane and pentafluoroethane) is frequently used.

Recently, in addition, further as a refrigerant suitable for environmental protection, so-called native refrigerants such as hydrocarbon refrigerants, ammonia and carbon dioxide have become specifically noted.

In the field of refrigerators, demand for energy saving is increasing year by year, and it has become desired to increase a coefficient of performance (COP). Accordingly, for refrigerator oils, it has become desired to lower the friction coefficient in the slide member of a refrigerator for enhancing COP in addition to wear resistance.

As a technique of improving these characteristics, for example, PTL 3 discloses a refrigerator oil which contains a base oil containing an oxygen-containing organic compound, and contains a phosphorus compound having a specific structure, and which is used in refrigerant environments.

### Citation List

### Patent Literature

PTL 1: WO2007/058072
PTL 2: JP 2007-137953 A
PTL 3: JP 2016-50242 A

### Summary of Invention

As described above, in the field of refrigerators, a demand for energy saving is high and, for example, in the case of refrigerators for cold storage chambers, the viscosity of a refrigerator oil is lowered to VG 32, 22, 15 or 10 to improve the energy saving performance thereof, but a refrigerator oil having a further lower viscosity is desired.

For example, in cold storage chamber oils for hydrocarbon refrigerants (HC refrigerants), using a mineral oil, energy saving by lowering the viscosity has been discussed as mentioned above, and heretofore refrigerator oils having an each viscosity as mentioned above have been used, but at present, one having a kinematic viscosity at 40°C of 5 to 8 mm²/s has become used. However, a further more lowered viscosity is desired, and in the case of further reduction in viscosity, a problem occurs that the friction characteristics of a refrigerator oil worsen. Consequently, heretofore, development of a refrigerator oil having a lower viscosity and having good friction characteristics is desired.

Here, as an example of an additive for improving the friction characteristics of a refrigerator oil, a polyphosphate ester-based compound as shown in the above-mentioned PTL 3 is referred to. However, in a refrigerator oil using a mineral oil, a polyphosphate ester-based compound could not fully dissolve in the mineral oil, and there occurs a problem that the mineral oil separates from the polyphosphate ester-based compound in an environment where a refrigerator oil is used, that is, the refrigerator oil of the type is poor in storage stability and is impracticable.

In addition, from the viewpoint of safety, a refrigerator oil having a higher flash point is desired.

The present invention has been made in consideration of the above-mentioned problems, and an object of the present invention is to provide a refrigerator oil being excellent in storage stability and friction characteristics and having a flash point of 21°C or higher.

### Solution to Problem

As a result of assiduous studies, the present inventors have found that a refrigerator oil containing a component (A) of a mineral oil having a specific kinematic viscosity at 40°C, a component (B) of a polyphosphate ester-based compound, and a component (C) of a dissolution aid for the component (B) can solve the above-mentioned problems. The present invention has been completed based on these findings. Specifically, according to aspects of the present invention, there are provided [1] to [3] mentioned below.
[1] A refrigerator oil containing:
   (A) a mineral oil having a kinematic viscosity at 40°C of 0.50 mm²/s or more and 8.00 mm²/s or less,
   (B) a polyphosphate ester-based compound, and
   (C) a dissolution aid for the component (B).
[2] A refrigerator oil composition containing a refrigerant and the refrigerator oil according to the above [1].
[3] A method for producing a refrigerator oil, including blending at least:
   (B) a polyphosphate ester-based compound and
   (C) a dissolution aid for the component (B), in
   (A) a mineral oil having a kinematic viscosity at 40°C of 0.50 mm²/s or more and 8.00 mm²/s or less.
[4] A refrigerator filled with the refrigerator oil according to the above [1] or the refrigerator oil composition according to the above [2].
[5] A refrigerator for cold storage chambers filled with the refrigerator oil according to the above [1] or the refrigerator oil composition according to the above [2].

### Advantageous Effects of Invention

There can be provided a refrigerator oil being excellent in storage stability and friction characteristics and having a flash point of 21°C or higher.

### Description of Embodiments

In the following, the present invention is described with reference to embodiments thereof.

### [Refrigerator Oil]

The refrigerator oil according to one aspect of the present invention (hereinafter also referred to simply as "refrigerator oil") contains a component (A) of a mineral oil having a kinematic viscosity at 40°C of 0.50 mm²/s or more and 8.00 mm²/s or less, a component (B) of a polyphosphate ester-based compound, and a component (C) of a dissolution aid for the component (B).

The components contained in the refrigerator oil are described below.

### <Component (A): mineral oil having a kinematic viscosity at 40°C of 0.50 mm²/s or more and 8.00 mm²/s or less>

The refrigerator oil contains, as a component (A), a mineral oil having a kinematic viscosity at 40°C of 0.50 mm²/s or more and 8.00 mm²/s or less (hereinafter also referred to simply as "component (A)").

Examples of the mineral oil of the component (A) include oils prepared by purification of lubricating oil fractions obtained by atmospheric distillation of paraffin-base mineral oils, intermediate-base mineral oils or naphthene-base mineral oils or obtained by reduced-pressure distillation of atmospheric residues by atmospheric distillation of crude oils, according to one or more treatments of solvent deasphalting, solvent extraction, hydrocracking, solvent dewaxing, catalytic dewaxing or hydrorefining, and oils obtained by isomerization of mineral oil wax or GTL WAX (gas-to-liquid wax) produced through Fischer-Tropsch synthesis.

The component (A) has a kinematic viscosity at 40°C of 0.50 mm²/s or more and 8.00 mm²/s or less. When the kinematic viscosity at 40°C is more than 8.00 mm²/s, the refrigerator oil is poor in point of energy saving. When the kinematic viscosity at 40°C is less than 0.50 mm²/s, for example, the refrigerator oil has a risk of leaking out between lubricated members.

From these viewpoints, the kinematic viscosity at 40°C of the component (A) is preferably 0.70 mm²/s or more, more preferably 1.00 mm²/s or more, even more preferably 1.50 mm²/s or more, further more preferably 2.00 mm²/s or more, and is also preferably 7.00 mm²/s or less, more preferably 5.00 mm²/s or less, even more preferably 4.00 mm²/s or less, further more preferably 3.00 mm²/s or less.

Also preferably, the sulfur content of the component (A) is 50 ppm by mass or less. The sulfur content is a value measured according to JIS K 2541-6. The component (A) having a sulfur content of 50 ppm by mass or less secures good oxidation stability, and is favorable from the viewpoint of preventing acid value increase and sludge formation. From such viewpoints, the sulfur content is more preferably 10 ppm by mass or less, even more preferably 5 ppm by mass or less, further more preferably 2 ppm by mass or less.

The flash point of the component (A) is preferably 21°C or higher, more preferably 45°C or higher, even more preferably 80°C or higher, further more preferably 90°C or higher, and is also preferably 180°C or lower, more preferably 160°C or lower, even more preferably 140°C or lower and further more preferably 115°C or lower.

In this description, the value of the kinematic viscosity at 40°C and the value of the flash point are values measured according to the methods described in the section of Examples given later. Regarding the value of the flash point, as a result of measurements, the flash point higher than 79°C is a value measured according to JIS K2265-4:2007 and the flash point of 79°C or lower is a value measured according to JIS K2265-1.

One alone of the component (A) may be used or two or more kinds thereof may be used in combination.

Preferably, the refrigerator oil contains the component (A) as a main component. Here, the wording "containing as a main component" means that the refrigerator oil contains the component (A) in a ratio of 50% by mass or more relative to the total amount of the refrigerator oil. With that, the content of the component (A) is more preferably 55% by mass or more relative to the total amount of the refrigerator oil, even more preferably 65% by mass or more, further more preferably 75% by mass or more, and is preferably 98% by mass or less, more preferably 95% by mass or less, even more preferably 90% by mass or less.

One alone of the component (A) may be used or two or more kinds thereof may be used in combination. In the case where two or more kinds of components (A) are used, the content of the component (A) means the total content of those components (A).

### <Component (B): Polyphosphate ester-based compound>

The refrigerator oil further contains, as a component (B), a polyphosphate ester-based compound (hereinafter also referred to simply as "component (B)"). Containing the component (B), the refrigerator oil may have increased friction characteristics.

The polyphosphate ester-based compound of the component (B) is a phosphate compound having at least two phosphate skeletons in one molecule, and is preferably a compound represented by the following general formula (1).

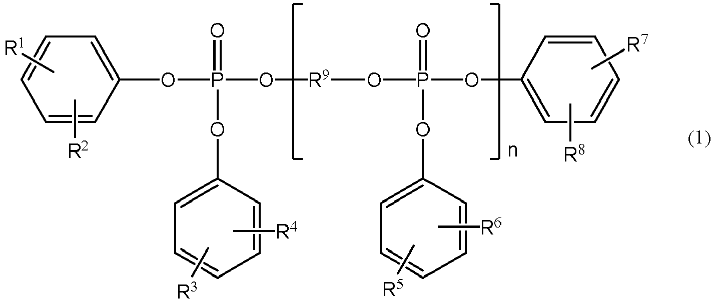

In the general formula (1), n represents an integer of 1 or more and 10 or less, R¹ to R⁸ each independently represent a hydrogen atom or an alkyl group having 1 or more and 20 or less carbon atoms, and R⁹ represents a divalent hydrocarbon group having 2 or more and 20 or less carbon atoms.

The alkyl group of R¹ to R⁸ may be linear, branched or cyclic, and includes a methyl group, an ethyl group, a n-propyl group, an isopropyl group, various butyl groups, various pentyl groups, various hexyl groups, various heptyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, and various octadecyl groups. "Various" is meant to indicate a "linear, branched or cyclic" hydrocarbon group. For example, "various butyl groups" are various butyl groups such as "a n-butyl group, a sec-butyl group, an isobutyl group, a tert-butyl group, and a cyclobutyl group".

Preferably, R¹ to R⁸ each are a hydrogen atom or an alkyl group having 1 to 4 carbon atoms, more preferably a hydrogen atom or a methyl group, and most preferably a hydrogen atom.

R⁹ is preferably an alkylene group, an arylene group, or a hydrocarbon group composed of an arylene group and an alkylene group, and also preferably contains an arylene group. Here, in the case where R⁹ is an alkylene group, examples of the alkylene group include an ethylene group, a propylene group, a butylene group, a pentylene group, a hexylene group, a heptylene group, an octylene group, a nonylene group, a decylene group, an undecylene group, a dodecylene group, a tetradecylene group, a hexadecylene group, an octadecylene group, and an eicosylene group, and these may be linear or variously branched. The alkylene group may be a cyclic alkylene group such as a cyclopropylene group, a cyclobutylene group, a cyclopentylene group, a cyclohexylene group, a cycloheptylene group, a cyclooctylene group, a dicyclopentylene group, or a tricyclopentylene group. The alkylene group as referred to herein includes an alkylidene group.

The arylene group may be a substituted or unsubstituted arylene group, and examples thereof include a substituted or unsubstituted phenylene group, a substituted or unsubstituted naphthylene group, and a substituted or unsubstituted biphenyl group. The arylene group is preferably an unsubstituted arylene group. Among these, a phenylene group is preferred.

Further, in the case where R⁹ is composed of an arylene group and an alkylene group, the arylene group may be the same as mentioned above, and the alkylene group includes a linear, branched or cyclic alkylene group having 1 or more and 14 or less carbon atoms, and examples thereof include a methylene group and the same as those mentioned hereinabove. Preferably, the alkylene group is a linear or branched alkylene group having 1 or more and 5 or less carbon atoms, and examples thereof include a methylene group, various ethylene groups such as 1,1-ethylene and 1,2-ethylene, various propylene groups such as 1,3-propylene, 1,2-propylene and 2,2-propylene, various butylene groups and various pentylene groups, and among these, a 2,2-propylene group (-C(CH₃)₂-) is more preferred.

In the general formula (1), n is preferably an integer of 1 or more and 8 or less. The compound may be a simple substance where n is a specific value, or may be a mixture of two or more kinds of substances where n is a specific value. More preferably n is an integer of 1 or more and 5 or less, even more preferably an integer of 1 or more and 3 or less, and is further more preferably 1. When n is smaller, the molecular weight of the compound is smaller, and the compound of the type may readily increase the solubility thereof in the component (A), and further may reduce the friction coefficient of the refrigerator oil.

Preferred examples of R⁹ include groups represented by the following general formulae (2) to (4). Groups represented by the general formula (2) or (3) are more preferred, and groups represented by the general formula (2) are more preferred. The general formula (2) may be any of an ortho-form, a meta-form or a para-form, but is preferably a meta-form.

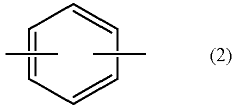

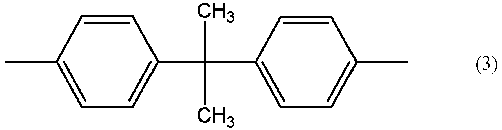

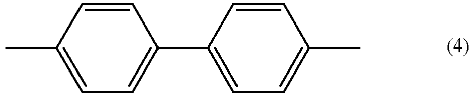

Examples of more preferred polyphosphate ester-based compounds include compounds represented by the following general formulae (5) and (6). Among these, compounds represented by the following general formula (5) are more preferred.

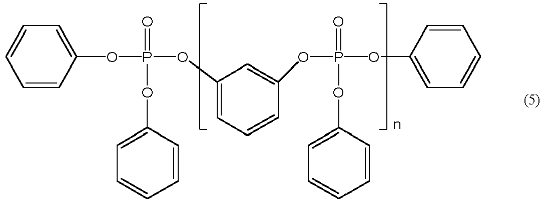

In the general formula (5), n represents an integer of 1 or more and 10 or less, and is preferably 1 or more and 8 or less, more preferably 1 or more and 5 or less, even more preferably 1 or more and 3 or less.

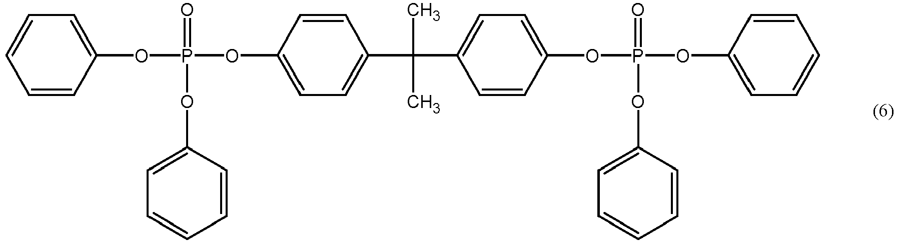

Preferably, the content of the component (B) is, based on the total amount of the refrigerator oil, 0.1% by mass or more and 10.0% by mass or less. When the content of the component (B) is 0.1% by mass or more, the friction coefficient in the slide members may be effectively reduced while the stability and the wear resistance of the refrigerator oil can be kept good. When the content of the component (B) is 10.0% by mass or less, the component (B) may be readily dissolved in the component (A) and the refrigerator oil may readily exhibit the effect thereof in accordance with the content of the component (B) therein.

In order to effectively reduce the friction coefficient in slide members while the stability and the wear resistance of the refrigerator oil are taken into consideration, the content of the component (B) is more preferably 0.2% by mass or more and 5.0% by mass or less, based on the total amount of the refrigerator oil, more preferably 0.3% by mass or more and 3.0% by mass or less, even more preferably 0.5% by mass or more and 2.0% by mass or less.

One alone of the component (B) may be used, or two or more kinds thereof may be used in combination. In the case where two or more kinds of components (B) are used in combination, the content of the component (B) means the total content of those components (B).

### <Component (C): Dissolution aid for component (B)>

The refrigerator oil further contains, as a component (C), a dissolution aid for the component (B).

Containing the component (C), the component (B) can be dissolved in the component (A) and the component (B) can be prevented from separating from the component (A), therefore enhancing the storage stability of the resultant refrigerator oil.

As described above, it has heretofore been difficult to dissolve the component (B) in a mineral oil. However, using the component (C), the component (B) can be dissolved in the component (A) to give a refrigerator oil excellent in friction characteristics.

The component (C) is preferably at least one selected from the group consisting of an oxygen-containing organic compound and an aromatic hydrocarbon compound.

The oxygen-containing organic compound is an oxygen-containing organic compound except the component (B), and include a compound containing an ether group, a ketone group, an ester group or a carbonate group in the molecule, and a compound containing a hetero atom (sulfur atom, fluorine atom, chlorine atom, silicon atom, nitrogen atom) along with these groups. More specifically, the compounds include polyoxyalkylene glycols (hereinafter also abbreviated as "PAG"), polyvinyl ethers (hereinafter also abbreviated as "PVE"), polyol esters (hereinafter also abbreviated as "POE"), and copolymers of poly(oxy)alkylene glycol or monoether thereof and polyvinyl ether (hereinafter also abbreviated as "ECP"). Poly(oxy)alkylene glycol indicates both polyalkylene glycol and polyoxyalkylene glycol.

One alone of oxygen-containing organic compounds may be used or two or more kinds thereof may be used in combination.

The aromatic hydrocarbon compounds include compounds except the component (B), that is, compounds having a structure of a benzene ring or a naphthalene ring in the molecule, and compounds further having a hetero atom (sulfur atom, fluorine atom, chlorine atom, silicon atom, nitrogen atom) along with these groups. More specifically, the compounds include alkylbenzenes, and alkylnaphthalenes, and in the alkylbenzenes (hereinafter also abbreviated as "AB") and the alkylnaphthalenes (hereinafter also abbreviated as "AN"), the alkyl chain moiety may be linear or branched but is preferably branched.

One alone of aromatic hydrocarbon compounds may be used or two or more kinds thereof may be used in combination.

The component (C) is preferably at least one selected from the group consisting of PAG, PVE, POE, ECP, AB, and AN, more preferably at least one selected from the group consisting of PAG, PVE, POE, and AB, even more preferably at least one selected from the group consisting of PAG and PVE, and further more preferably at least one selected from PAG.

### (Polyoxyalkylene glycols (PAG))

Examples of the polyoxyalkylene glycols (PAG) include compounds represented by the following general formula (P-1). In the case where PAG is contained as the component (C), one alone of PAG may be used or two or more kinds thereof may be used in combination.

R¹¹-[(OR¹²)ₚ-OR¹³]_{q} (P-1)

In the general formula (P-1), R¹¹ represents a hydrogen atom, a monovalent hydrocarbon group having 1 or more and 10 or less carbon atoms, an acyl group having 2 or more and 10 or less carbon atoms, a hydrocarbon group having 2 or more and 6 or less bonding sites and having 1 or more and 10 or less carbon atoms, or an oxygen-containing hydrocarbon group having 1 or more and 10 or less carbon atoms, R¹² represents an alkylene group having 2 or more and 4 or less carbon atoms, R¹³ represents a hydrogen atom, a hydrocarbon group having 1 or more and 10 or less carbon atoms, an acyl group having 2 or more and 10 or less carbon atoms, or an oxygen-containing hydrocarbon group having 1 or more and 10 or less carbon atoms, q represents an integer of 1 to 6, and p represents a number such that a mean value of p × q is 6 or more and 80 or less.

In the general formula (P-1), the monovalent hydrocarbon group having 1 or more and 10 or less carbon atoms of each of R¹¹ and R¹³ may be linear, branched or cyclic. The hydrocarbon group is preferably an alkyl group, and specific examples thereof include a methyl group, an ethyl group, a n-propyl group, an isopropyl group, various butyl groups, various pentyl groups, various hexyl groups, various heptyl groups, various octyl groups, various nonyl groups, various decyl groups, a cyclopentyl group, and a cyclohexyl group. "Various alkyl groups" indicate "linear, branched or cyclic hydrocarbon groups", and for example, "various butyl groups" indicate various butyl groups such as "a n-butyl group, a sec-butyl group, an isobutyl group, a tert-butyl group, and a cyclobutyl group".

When the monovalent hydrocarbon group has 10 or less carbon atoms, the miscibility of the compound with the refrigerant to be mentioned below is good. From such a viewpoint, the carbon number of the monovalent hydrocarbon group is more preferably 1 or more and 4 or less.

The hydrocarbon group moiety of the acyl group having 2 or more and 10 or less carbon atoms of each of R¹¹ and R¹³ may be linear, branched or cyclic. The hydrocarbon group moiety of the acyl group is preferably an alkyl group, and specific examples thereof include those of the alkyl group having 1 or more and 9 or less carbon atoms that can be selected for R¹¹ and R¹³. When the acyl group has 10 or less carbon atoms, the miscibility of the compound with the refrigerant to be mentioned below is good. The carbon number of the acyl group is preferably 2 or more and 4 or less.

In the case where R¹¹ and R¹³ are both hydrocarbon groups or acyl groups, R¹¹ and R¹³ may be the same as or different from each other.

In the case where q is 2 or more, plural R¹³'s in one molecule may be the same as or different from each other.

In the case where R¹¹ is a hydrocarbon group having 2 or more and 6 or less bonding sites and having 1 or more and 10 or less carbon atoms, the hydrocarbon group may be linear or cyclic. The hydrocarbon group having 2 bonding sites is preferably an aliphatic hydrocarbon group, and examples thereof include an ethylene group, a propylene group, a butylene group, a pentylene group, a hexylene group, a heptylene group, an octylene group, a nonylene group, a decylene group, a cyclopentylene group, and a cyclohexylene group. The other hydrocarbon groups include residues of bisphenols such as biphenol, bisphenol F or bisphenol A from which the hydroxy groups are removed. The hydrocarbon group having 3 or more and 6 or less bonding sites is preferably an aliphatic hydrocarbon group, and examples thereof include residues of polyalcohols such as trimethylolpropane, glycerin, pentaerythritol, sorbitol, 1,2,3-trihydroxycyclohexane or 1,3,5-trihydroxycyclohexane from which the hydroxy groups are removed.

When the carbon number of the aliphatic hydrocarbon group is 10 or less, the miscibility of the compound with the refrigerant to be mentioned below is good. The carbon number of the aliphatic hydrocarbon group is preferably 2 or more and 6 or less.

The oxygen-containing hydrocarbon group having 1 or more and 10 or less carbon atoms of each of R¹¹ and R¹³ includes an ether bond-having, linear aliphatic group or cyclic aliphatic group (for example, a tetrahydrofurfuryl group).

Preferably, at least one of R¹¹ and R¹³ is an alkyl group, more preferably an alkyl group having 1 or ore and 4 or less carbon atoms.

R¹² in the general formula (P-1) is an alkylene group having 2 or more and 4 or less carbon atoms, and the oxyalkylene group of the repeating unit includes an oxyethylene group, an oxypropylene group, and an oxybutylene group. One molecule of the compound may contain one and the same oxyalkylene group, or may contain 2 or more kinds of oxyalkylene groups, but preferably, one molecule contains at least an oxypropylene unit, and more preferably, the oxyalkylene unit contains an oxypropylene unit in an amount of 50 mol% or more.

q in the general formula (P-1) is an integer of 1 or more and 6 or less, and is defined in accordance with the number of the bonding sites of R¹¹. For example, when R¹¹ is an alkyl group or an acyl group, q is 1. When R¹¹ is an aliphatic hydrocarbon group having 2, 3, 4, 5 or 6 bonding sites, q is 2, 3, 4, 5 or 6, respectively. p is a number such that the average value of p × q is 6 or more and 80 or less. When the average value is 80 or less, the miscibility is good. q is preferably an integer of 1 or more and 3 or less, more preferably 1. However, the average value of p × q is preferably so defined that the kinematic viscosity at 40°C of the compound could fall within the preferred range thereof of the component (C) to be mentioned later.

The polyoxyalkylene glycols represented by the general formula (P-1) include polyoxyalkylene glycols having a hydroxy group at the terminal thereof, and in such a proportion that the content of the terminal hydroxy group is 50 mol% or less relative to all the terminal groups, such polyoxyalkylene glycols having a hydroxy group at the terminal thereof may also be favorable used here.

As specific examples of such PAG, for example, there is mentioned at least one selected from polypropylene glycol diol, polypropylene glycol nonyl ether, polypropylene polyethylene glycol dimethyl ether, poly(oxypropylene) glycol triether, polypropylene glycol dimethyl ether, and polypropylene glycol monobutyl ether, and at least one selected from polypropylene glycol dimethyl ether and polypropylene glycol monobutyl ether is preferred.

### (Polyvinyl ethers (PVE))

The polyvinyl ethers (PVE) are polymers having a vinyl ether-derived structural unit, and examples thereof include polyvinyl ether compounds having a structural unit represented by the following general formula (A-1).

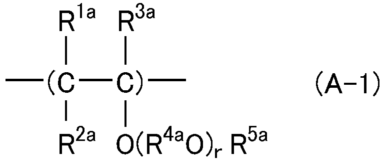

In the general formula (A-1), R^{1a}, R^{2a} and R^{3a} each independently represent a hydrogen atom or a hydrocarbon group having 1 or more and 8 or less carbon atoms, and they may be the same as or different from each other. Examples of the hydrocarbon group include alkyl groups such as a methyl group, an ethyl group, a n-propyl group, an isopropyl group, a n-butyl group, an isobutyl group, a sec-butyl group, a tert-butyl group, various pentyl groups, various hexyl groups, various heptyl groups, and various octyl groups; cycloalkyl groups such as a cyclopentyl group, a cyclohexyl group, various methylcyclohexyl groups, various ethylcyclohexyl groups, and various dimethylcyclohexyl groups; aryl groups such as a phenyl group, various methylphenyl groups, various ethylphenyl groups, and various dimethylphenyl groups; and arylalkyl groups such as a benzyl group, various phenylethyl groups and various methylbenzyl groups, and alkyl groups are preferred.

More preferably, R^{1a}, R^{2a} and R^{3a} each are independently a hydrogen atom or an alkyl group having 3 or less carbon atoms, even more preferably, all of R^{1a}, R^{2a} and R^{3a} are hydrogen atoms. r in the genera formula (A-1) indicates a repeating number, and is such a number that the average value thereof falls within a range of 0 or more and 10 or less, but is preferably 0.

In the general formula (A-1), R^{4a} represents a divalent hydrocarbon group having 2 or more and 10 or less carbon atoms. Examples of the divalent hydrocarbon group having 2 or more and 10 or less carbon atoms include divalent aliphatic hydrocarbon groups such as an ethylene group, a phenylethylene group, a 1,2-propylene group, a 2-phenyl-1,2-propylene group, a 1,3-propylene group, various butylene groups, various pentylene groups, various hexylene groups, various heptylene groups, various octylene groups, various nonylene groups, and various decylene groups; alicyclic hydrocarbon groups having two bonding sites in alicyclic hydrocarbons such as cyclohexane, methylcyclohexane, ethylcyclohexane, dimethylcyclohexane and propylcyclohexane; divalent aromatic hydrocarbons such as various phenylene groups, various methylphenylene groups, various ethylphenylene groups, various dimethylphenylene groups, and various naphthylene groups; alkylaromatic hydrocarbon groups having monovalent bonding site at both the alkyl group moiety and the aromatic moiety of alkylaromatic hydrocarbons such as toluene and ethylbenzene; and alkylaromatic hydrocarbon groups having a bonding site at the alkyl group moiety of polyalkylaromatic hydrocarbons such as xylene and diethylbenzene. Among these, aliphatic hydrocarbon groups having 2 or more and 4 or less carbon atoms are more preferred. Plural R^{4a}O's may be the same or different.

In the general formula (A-1), R^{5a} represents a hydrocarbon group having 1 or more and 10 or less carbon atoms. Examples of the hydrocarbon group include alkyl groups such as a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, various nonyl groups, and various decyl groups; cycloalkyl groups such as a cyclopentyl group, a cyclohexyl group, various methylcyclohexyl groups, various ethylcyclohexyl groups, various propylcyclohexyl groups, and various dimethylcyclohexyl groups; aryl groups such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups such as a benzyl group, various phenylethyl groups, various methylbenzyl groups, various phenylpropyl groups, and various phenylbutyl groups. Preferably, R^{5a} is a hydrocarbon group having 1 or more and 8 or less carbon atoms, more preferably an alkyl group having 1 or more and 6 or less carbon atoms. The alkyl group may be linear, branched or cyclic.

Among the polyvinyl ether compounds having a structural unit represented by the general formula (A-1), preferred are polymers or copolymers having a structural unit where R^{1a}, R^{2a} and R^{3a} are all hydrogen atoms, r is 0 and R^{5a} is an ethyl group in a ratio of 50 mol% or more and 100 mol% or less, and a structural unit where R^{5a} is an alkyl group having 3 or 4 carbon atoms in a ratio of 0 mol% or more and 50 mol% or less. The PVEs are more preferably copolymers where the proportion of the structural unit where R^{5a} is an ethyl group is 70 mol% or more and 100 mol% or less and the proportion of the structural unit where R^{5a} is an alkyl group having 3 or 4 carbon atoms is 0 mol% or more and 30 mol% or less, and even more preferably copolymers where the proportion of the former is 80 mol% or more and 95 mol% or less and the proportion of the latter is 5 mol% or more and 20 mol% or less.

The alkyl group having 3 or 4 carbon atoms of R^{5a} includes a n-propyl group, an isopropyl group, a n-butyl group, an isobutyl group, a sec-butyl group, and a tert-butyl group, and is preferably an isobutyl group.

The polyvinyl ether compounds have a structural unit represented by the general formula (A-1), and the repeating number may be suitably selected depending on the desired kinematic viscosity. The polyvinyl ether compounds may be produced through polymerization of corresponding vinyl ether monomers. Examples of the vinyl ether monomers are represented by the following general formula (A-2).

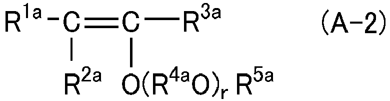

In the general formula (A-2), R^{1a}, R^{2a}, R^{3a}, R^{4a} and R^{5a}, and r are the same as those mentioned above.

The vinyl ether monomers include various monomers corresponding to the above-mentioned polyvinyl ether compounds, and examples thereof include vinyl methyl ether, vinyl ethyl ether, vinyl n-propyl ether, vinyl isopropyl ether, vinyl n -butyl ether, vinyl isobutyl ether, vinyl sec-butyl ether, vinyl tert-butyl ether, vinyl n-pentyl ether, vinyl n-hexyl ether, vinyl 2-methoxyethyl ether, vinyl 2-ethoxyethyl ether, vinyl 2-methoxy-1-methylethyl ether, vinyl-2-methoxy-propyl ether, vinyl 3,6-dioxaheptyl ether, vinyl 3,6,9-trioxadecyl ether, vinyl 1,4-dimethyl-3,6-dioxaheptyl ether, vinyl 1,4,7-trimethyl-3,6,9-trioxadecyl ether, vinyl 2,6-dioxa-4-heptyl ether, vinyl 2,6,9-trioxa-4-decyl ether, 1-methoxypropene, 1-ethoxypropene, 1-n-propoxypropene, 1-isopropoxypropene, 1-n-butoxypropene, 1-isobutoxypropene, 1-sec-butoxypropene, 1-tert-butoxypropene, 2-methoxypropene, 2-ethoxypropene, 2-n-propoxypropene, 2-isopropoxypropene, 2-n-butoxypropene, 2-isobutoxypropene, 2-sec-butoxypropene, 2-tert-butoxypropene, 1-methoxy-1-butene, 1-ethoxy-1-butene, 1-n-propoxy-1-butene, 1-isopropoxy-1-butene, 1-n-butoxy-1-butene, 1-isobutoxy-1-butene, 1-sec-butoxy-1-butene, 1-tert-butoxy-1-butene, 2-methoxy-1-butene, 2-ethoxy-1-butene, 2-n-propoxy-1-butene, 2-isopropoxy-1-butene, 2-n-butoxy-1-butene, 2-isobutoxy-1-butene, 2-sec-butoxy-1-butene, 2-tert-butoxy-1-butene, 2-methoxy-2-butene, 2-ethoxy-2-butene, 2-n-propoxy-2-butene, 2-isopropoxy-2-butene, 2-n-butoxy-2-butene, 2-isobutoxy-2-butene, 2-sec-butoxy-2-butene, and 2-tert-butoxy-2-butene. These vinyl ether monomers may be produced according to known methods.

In the terminal part of the polyvinyl ether compounds having a structural unit represented by the general formula (A-1), a monovalent group derived from saturated hydrocarbons, ethers, alcohols, ketones, amides and nitriles may be introduced according to known methods.

Above all, the polyvinyl ether compounds preferably have a terminal structure represented by any of the following (1) to (4).
(1) One terminal is represented by the following general formula (A-1-i) and the remaining terminal is represented by the following general formula (A-1-ii).

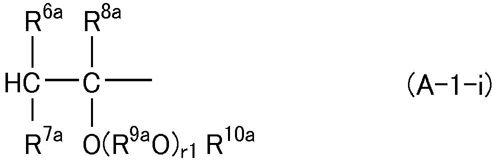

In the general formula (A-1-i), R^{6a}, R^{7a} and R^{8a} each independently represent a hydrogen atom or a hydrocarbon group having 1 or more and 8 or less carbon atoms, and they may be the same as or different from each other. R^{9a} represents a divalent hydrocarbon group having 2 or more and 10 or less carbon atoms, R^{10a} represents a hydrocarbon group having 1 or more and 10 or less carbon atoms, r1 represents a number of 0 or more and 10 or less as the average value thereof, and plural R^{9a}O's, if any, may be the same or different.

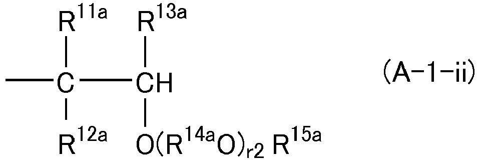

In the general formula (A-1-ii), R^{11a}, R^{12a} and R^{13a} each independently represent a hydrogen atom or a hydrocarbon group having 1 or more and 8 or less carbon atoms, and they may be the same as or different from each other. R^{14a} represents a divalent hydrocarbon group having 2 or more and 10 or less carbon atoms, R^{15a} represents a hydrocarbon group having 1 or more and 10 or less carbon atoms, r2 represents a number of 0 or more and 10 or less as the average value thereof, and plural R^{14a}O's, if any, may be the same or different.
(2) One terminal is represented by the above-mentioned general formula (A-1-i) and the remaining terminal is represented by the following general formula (A-1-iii). 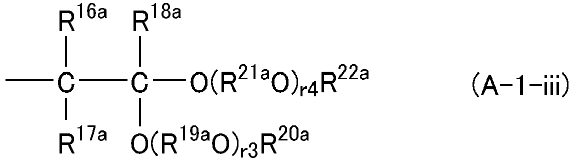
   In the general formula (A-1-iii), R^{16a}, R^{17a} and R^{18a} each independently represent a hydrogen atom or a hydrocarbon group having 1 or more and 8 or less carbon atoms, and they may be the same as or different from each other. R^{19a} and R^{21a} each independently represent a divalent hydrocarbon group having 2 or more and 10 or less carbon atoms, and they may be the same as or different from each other. R^{20a} and R^{22a} each independently represent a hydrocarbon group having 1 or more and 10 or less carbon atoms, and they may be the same as or different from each other. r3 and r4 each represent a number of 0 or more and 10 or less as the average value thereof, and they may be the same as or different from each other. Plural R^{19a}O's, if any, may be the same or different, and plural R^{21a}O's, if any, may be the same or different.
(3) One terminal is represented by the above-mentioned general formula (A-1-i) and the remaining terminal has an olefinic unsaturated bond.
(4) One terminal is represented by the above-mentioned general formula (A-1-i) and the remaining terminal is represented by the following general formula (A-1-iv).

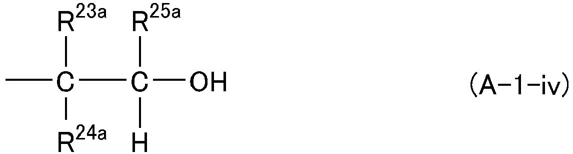

In the general formula (A-1-iv), R^{23a}, R^{24a} and R^{25a} each independently represent a hydrogen atom or a hydrocarbon group having 1 or more and 8 or less carbon atoms, and they may be the same as or different from each other.

The polyvinyl ether compound may be a mixture of two or more kinds selected from those having a terminal structure of any of the above-mentioned (1) to (4). Preferred examples of such mixtures include a mixture of the above (1) and (4), and a mixture of the above (2) and (3).

Preferably, the polymerization degree and the terminal structure of the polyvinyl ether compound are selected so that the viscosity of the refrigerator oil can fall within the preferred range to be mentioned later. One alone of such polyvinyl ether compounds may be used or two or more kinds thereof may be used in combination.

Among the polyvinyl ether compounds having a structural unit represented by the general formula (A-1), preferred are those where one terminal thereof is represented by the general formula (A-1-i) and the remaining terminal thereof is represented by the general formula (A-1-ii).

More preferably, in the general formulae (A-1-i) and (A-1-ii), R^{6a}, R^{7a}, R^{8a}, R^{11a}, R^{12a} and R^{13a} are hydrogen atoms, r1 and r2 are 0, and R^{10a} and R^{15a} each are an alkyl group having 1 or more and 4 or less carbon atoms.

### (Polyol esters (POE))

The polyol esters are preferably esters of a diol or a polyol having 3 or more and 20 or less hydroxy groups, and a fatty acid.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include polyalcohols such as trimethylolethane, trimethylolpropane, trimethylolbutane, di(trimethylolpropane), tri(trimethylolpropane), pentaerythritol, di(pentaerythritol), tri(pentaerythritol), glycerin, polyglycerin (2- to 20-mers of glycerin), 1,3,5-pentanetriol, sorbitol, sorbitan, sorbitol-glycerin condensate, adonitol, arabitol, xylitol, and mannitol; saccharides such as xylose, arabinose, ribose, rhamnose, glucose, fructose, galactose, mannose, sorbose, cellobiose, maltose, isomaltose, trehalose, sucrose, raffinose, gentianose, and melezitose; and partial ether compounds thereof; and methylglucosides (glycosides). Among these, as the polyols, preferred are hindered alcohols such as neopentyl glycol, trimethylolethane, trimethylolpropane, trimethylolbutane, di(trimethylolpropane), tri(trimethylolpropane), pentaerythritol, di(pentaerythritol), and tri(pentaerythritol).

The fatty acids are not specifically limited in point of the carbon number thereof, but those having 1 or more and 24 or less carbon atoms are preferably used. Among the fatty acids having 1 or more and 24 or less carbon atoms, from the viewpoint of lubricity, more preferred are fatty acids having 3 or more carbon atoms, even more preferably 4 or more carbon atoms, and further more preferably 5 or more carbon atoms. From the viewpoint of miscibility with refrigerant to be mentioned later, fatty acids having 18 or less carbon atoms are more preferred, those having 12 or less carbon atoms are even more preferred, and those having 9 or less carbon atoms are further more preferred.

The fatty acids may be any of linear fatty acids or branched fatty acids, and from the viewpoint of lubricity, linear fatty acids are preferred, and from the viewpoint of hydrolysis stability, branched fatty acids are preferred. Further, the fatty acids may be any of saturated fatty acids or unsaturated fatty acids.

Examples of the fatty acids include linear or branched fatty acids such as isobutyric acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, and oleic acid; and so-called neoacids where the α-carbon atom is quaternary. Further, isobutyric acid, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid, 2-ethylpentanoic acid, 2-ethylhexanoic acid and 3,5,5-trimethylhexanoic acid are preferred.

The polyol esters may be partial esters where all hydroxy groups of polyol are not esterified but some of them have remained as such, or may be complete esters where all hydroxy groups have been esterified, or may also be a mixture of a partial ester and a complete ester, but complete esters are preferred.

Among polyol esters, from the viewpoint of more excellent hydrolysis stability, esters of hindered alcohols such as neopentyl glycol, trimethylolethane, trimethylolpropane, trimethylolbutane, di(trimethylolpropane), tri(trimethylolpropane), pentaerythritol, di(pentaerythritol) or tri(pentaerythritol) are more preferred, esters of neopentyl glycol, trimethylolethane, trimethylolpropane, trimethylolbutane or pentaerythritol are even more preferred, and from the viewpoint of miscibility with refrigerant to be mentioned below and of hydrolysis stability, esters of pentaerythritol are further more preferred.

Specific examples of preferred polyol esters include diesters of neopentyl glycol and at least one fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, triesters of trimethylolethane and at least one fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid, triesters of trimethylolpropane and at least one fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, triesters of trimethylolbutane and at least one fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid, and tetraesters of pentaerythritol and at least one fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid.

These esters may be a mixture of 2 or more esters of a polyol and one kind of fatty acid, or may be an ester of a polyol and a mixed fatty acid of two or more kinds of fatty acids. From the viewpoint of low-temperature characteristics and excellent miscibility with refrigerant, an ester of a polyol and such a mixed fatty acid is more preferred.

One alone of POE may be used or two or more kinds of POE's may be used in combination.

### (Copolymer (ECP) of poly(oxy)alkylene glycol or monoether thereof and polyvinyl ether)

Examples of the copolymer (ECP) of the poly(oxy)alkylene glycol or a monoether thereof and a polyvinyl ether include copolymers having a structural unit represented by the following general formula (C-1), and copolymers having a structural unit represented by the following general formula (C-2) (these may be hereinafter referred to as "polyvinyl ether copolymer I" and "polyvinyl ether copolymer II", respectively).

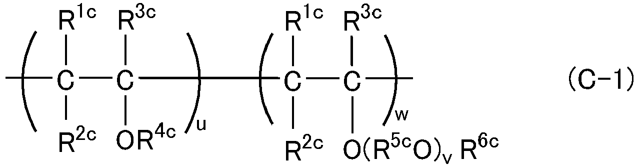

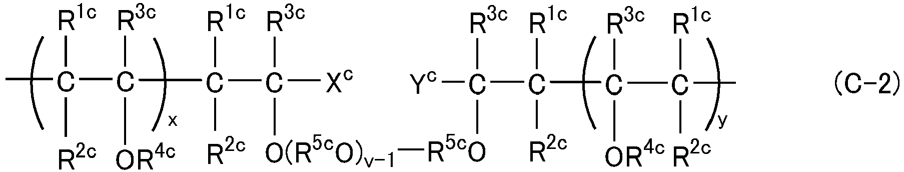

In the general formula (C-1), R^{1c}, R^{2c} and R^{3c} each independently represent a hydrogen atom or a hydrocarbon group having 1 or more and 8 or less carbon atoms, and they may be the same as or different from each other. R^{4c} represents a hydrocarbon group having 1 or more and 10 or less carbon atoms. R^{5c} represents a divalent hydrocarbon group having 2 or more and 4 or less carbon atoms. R^{6c} represents an aliphatic or alicyclic hydrocarbon group having 1 or more and 20 or less carbon atoms, an aromatic hydrocarbon group having 1 or more and 20 or less carbon atoms, an acyl group having 2 or more and 20 or less carbon atoms, or an oxygen-containing hydrocarbon group having 2 or more and 50 or less carbon atoms. Plural R^{1c}'s to R^{6c}'s, if any, each may be the same or different.

Examples of the hydrocarbon group having 1 or ore and 8 or less carbon atoms in R^{1c} to R^{3c} include alkyl groups such as a methyl group, an ethyl group, a n-propyl group, an isopropyl group, a n-butyl group, an isobutyl group, a sec-butyl group, a tert-butyl group, various pentyl groups, various hexyl groups, various heptyl groups, and various octyl groups; cycloalkyl groups such as a cyclopentyl group, a cyclohexyl group, various methylcyclohexyl groups, various ethylcyclohexyl groups, and various dimethylcyclohexyl groups; aryl groups such as various dimethylphenyl groups; and arylalkyl groups such as a benzyl group, various phenylethyl groups, and various methylbenzyl groups.

Preferably, these R^{1c}, R^{2c} and R^{3c} each are a hydrogen atom.

In the general formula (C-1), examples of the hydrocarbon group having 1 or more and 10 or less carbon atoms represented by R^{4c} include alkyl groups such as a methyl group, an ethyl group, a n-propyl group, an isopropyl group, a n-butyl group, an isobutyl group, various pentyl groups, various hexyl groups, various heptyl groups, various octyl groups, various nonyl groups and various decyl groups; cycloalkyl groups such as a cyclopentyl group, a cyclohexyl group, various methylcyclohexyl groups, various ethylcyclohexyl groups, various propylcyclohexyl groups, and various dimethylcyclohexyl groups; aryl groups such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups such as a benzyl group, various phenylethyl groups, various methylbenzyl groups, various phenylpropyl groups, and various phenylbutyl groups.

In the general formula (C-1), specifically, the divalent hydrocarbon group having 2 or more and 4 or less carbon atoms represented by R^{5c} is a divalent alkylene group including a methylene group, an ethylene group, various propylene groups and various butylene groups.

In the general formula (C-1), v indicates a repeating number of R^{5c}O, and the average value thereof is a number falling within a range of 1 or more and 50 or less, preferably 1 or more and 20 or less, more preferably 1 or more and 10 or less, even more preferably 1 or more and 5 or less. Plural R^{5c}O's, if any, may be the same or different. v may be the same in each structural unit, or may differ therein.

In the general formula (C-1), w is 1 or more and 50 or less, preferably 1 or more and 10 or less, more preferably 1 or more and 2 or less, and even more preferably 1. In the general formula (C-1), u is a number of 0 or more and 50 or less, preferably 2 or more and 25 or less, more preferably 5 or more and 15 or less. In the case where w and u are plural numbers, the bonding mode of the plural repeating units may be in a block or random form.

R^{6c} in the general formula (C-1) is preferably an alkyl group having 1 or more and 10 or less carbon atoms, an acyl group having 2 or more and 10 or less carbon atoms, or an oxygen-containing hydrocarbon group having 2 or more and 50 or less carbon atoms.

Examples of the alkyl group having 1 or more and 10 or less carbon atoms include a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, various nonyl groups, various decyl groups, a cyclopentyl group, a cyclohexyl group, various methylcyclohexyl groups, various ethylcyclohexyl groups, various propylcyclohexyl groups, and various dimethylcyclohexyl groups.

The acyl group having 2 or more and 10 or less carbon atoms includes an acetyl group, a propionyl group, a butyryl group, an isobutyryl group, a valeryl group, an isovaleryl group, a pivaloyl group, a benzoyl group and a toluoyl group.

The oxygen-containing hydrocarbon group having 2 or more and 50 or less carbon atoms preferably includes a methoxymethyl group, a methoxyethyl group, a methoxypropyl group, a 1,1-bismethoxypropyl group, a 1,2-bismethoxypropyl group, an ethoxypropyl group, a (2-methoxyethoxy)propyl group, and a (1-methyl-2-methoxy)propyl group.

In the polyvinyl ether copolymer II having a structural unit represented by the general formula (C-2), R^{1c} to R^{5c}, and v are the same as those described in the general formula (C-1). Plural R^{4c}'s and R^{5c}'s, if any, each may be the same or different. x and y each indicate a number of 1 or more and 50 or less, and in the case where the formula has plural x's and y's, the bonding mode may be in a block form or a random form. X^{c} and Y^{c} each independently represent a hydrogen atom, a hydroxy group or a hydrocarbon group having 1 or more and 20 or less carbon atoms.

It is preferred that the repeating numbers u, w, x and y in the general formulae (C-1) and (C-2) are respectively and independently so selected as to attain a desired viscosity as mentioned below. Methods for producing the polyvinyl ether copolymers I and II are not specifically limited.

The polyvinyl ether copolymer I having a structural unit represented by the general formula (C-1) may be a polyvinyl ether copolymer I having such a structure that one terminal thereof is represented by the following general formula (C-3) or (C-4) and the remaining terminal thereof is represented by the following general formula (C-5) or (C-6).

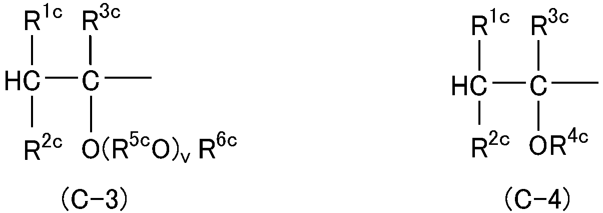

In the general formulae (C-3) and (C-4), R^{1c} to R^{6c} and v are the same as those described in the general formula (C-1).

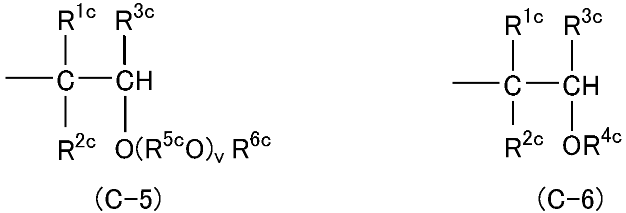

In the general formulae (C-5) and (C-6), R^{1c} to R^{6c} and v are the same as those described in the general formula (C-1).

One alone of ECP may be used, or two or more kinds thereof may be used in combination.

### (Alkylbenzene (AB))

The alkylbenzene (AB) is a compound having an alkyl group on the benzene ring, and alkylbenzenes for use for refrigerator oils are usable here.

The alkylbenzene may be a branched one having a branched alkyl group, or may be a linear one having a linear alkyl group, but is preferably a branched one.

The alkylbenzene includes monoalkylbenzenes, dialkylbenzenes and trialkylbenzenes, and from the viewpoint of thermal stability, alkylbenzenes having two or more alkyl groups are preferred, and at least one selected from the group consisting of dialkylbenzenes and trialkylbenzenes is more preferred.

The carbon number of the alkyl group is preferably 2 or more, more preferably 4 or more. The carbon number of the alkyl group is also preferably 36 or less, more preferably 24 or less.

In the case where the alkylbenzene has plural alkyl groups, the carbon number of the alkyl groups means the sum total of the carbon atoms that the alkyl groups have.

One alone of AB may be used or two or more kinds thereof may be used in combination.

### (Alkylnaphthalene (AN))

The alkylnaphthalene is a compound having an alkyl group on the naphthalene ring, and alkylnaphthalenes for use for refrigerator oils are usable here.

The alkylnaphthalene may be a branched one having a branched alkyl group, or may be a linear one having a linear alkyl group, but is preferably a branched one.

The alkylnaphthalene includes monoalkylbenzenes, dialkylnaphthalenes and trialkylnaphthalenes. Alkylnaphthalenes having 2 or more alkyl groups are preferred, and at least one selected from the group consisting of dialkylnaphthalenes and trialkylnaphthalenes is more preferred.

The carbon number of the alkyl group is preferably 2 or more, more preferably 4 or more. The carbon number of the alkyl group is also preferably 36 or less, more preferably 24 or less.

In the case where the alkylnaphthalene has plural alkyl groups, the carbon number of the alkyl groups means the sum total of the carbon atoms that the alkyl groups have.

One alone of AN may be used or two or more kinds thereof may be used in combination.

The kinematic viscosity at 40°C of the component (C) is, from the viewpoint of attaining good lubrication performance, preferably 0.5 mm²/s or more, more preferably 1.0 mm²/s or more, even more preferably 2.0 mm²/s or more, and further more preferably 3.0 mm²/s or more. From the viewpoint of excellent miscibility between the refrigerant to be mentioned below and the refrigerator oil, and from the viewpoint of attaining good energy saving, the kinematic viscosity at 40°C of the component (C) is preferably 20 mm²/s or less, more preferably 15 mm²/s or less, even more preferably 10.0 mm²/s, further more preferably 7.5 mm²/s or less.

The content of the component (C) is, from the viewpoint of dissolving the component (B) and from the viewpoint of maintaining good stability and wear resistance of the refrigerator oil, is preferably 1.0% by mass or more relative to the total amount of the refrigerator oil, more preferably 2.0% by mass or more, even more preferably 3.0% by mass or more, and is preferably less than 50% by mass, more preferably 40% by mass or less.

One alone of the component (C) may be used or two or more kinds thereof may be used in combination. In the case where two or more kinds of components (C) are used in combination, the content of the components (C) means the total content of those components (C).

From the viewpoint of preventing discoloration of the refrigerator oil to be obtained, the ratio by mass of the content of component (C) to the content of component (A) [(C)/(A)] is preferably 2.0 or less, more preferably 1.0 or less, even more preferably 0.8 or less, further more preferably 0.40 or less, and is preferably 0.01 or more, more preferably 0.03 or more, even more preferably 0.05 or more, and further more preferably 0.10 or more.

From the viewpoint of improving the solubility of the component (B) in the component (A), the ratio by mass of the content of the component (C) to the content of the component (B) [(C)/(B)] is preferably 2.0 or more, more preferably 3.0 or more, even more preferably 5.0 or more and is preferably 80 or less, more preferably 70 or less, even more preferably 50 or less, further more preferably 40 or less, and especially preferably 30 or less.

### <Other additives>

The refrigerator oil may further contain, in addition to the above-mentioned components (A) to (C), one or more various additives (other additives) such as an antioxidant, an extreme pressure agent, an acid scavenger, an anti-foaming agent,, an oiliness agent, an oxygen scavenger, a metal deactivator, and a rust inhibitor. Above all, it is preferred to contain at least one selected from an antioxidant, an extreme pressure agent and an acid scavenger. However, the refrigerator oil may not contain the other additives. The total content of the other additives is preferably 15% by mass or less relative to the total amount of the refrigerator oil, more preferably 5% by mass or less, even more preferably 4% by mass or less, and is preferably 0% by mass or more, more preferably 1% by mass or more, and even more preferably 2% by mass or more. Similarly, the total content of the components (A) to (C) is preferably 85% by mass or more relative to the total amount of the refrigerator oil, more preferably 95% by mass or more, even more preferably 96% by mass or more, and is preferably 100% by mass or less, more preferably 99% by mass or less, even more preferably 98% by mass or less. As described above, in the case where the refrigerator oil does not contain any other additive, the total content of the components (A) to (C) is 100% by mass relative to the total amount of the refrigerator oil.

The antioxidant includes a phenol-based antioxidant, such as 2,6-di-tert-butyl-4-methylphenol, 2,6-di-tert-butyl-4-ethylphenol, and 2,2'-methylenebis(4-methyl-6-tert-butylphenol); and an amine type antioxidant, such as phenyl-α-naphthylamine, and N,N'-di-phenyl-p-phenylenediamine, and a phenol-based antioxidant is preferred. From the standpoints of effects and economy, the content of the antioxidant is preferably 0.01% by mass or more relative to the total amount of the refrigerator oil, more preferably 0.05% by mass or more, and is preferably 5% by mass or less, more preferably 3% by mass or less.

The extreme pressure agent may be a phosphorus-containing extreme pressure agent including phosphates, acid phosphates, phosphites, acid phosphites and amine salts thereof.

The phosphorus-containing extreme pressure agent has one phosphorus atom in the molecule thereof, examples thereof include tricresyl phosphate, trithiophenyl phosphate, tri(nonylphenyl) phosphite, dioleylhydrogen phosphite, and 2-ethylhexyldiphenyl phosphite.

As other extreme pressure agents, metal carboxylates are also usable. Metal carboxylates as referred to herein include metal salts of carboxylic acids having 3 or more and 60 or less carbon atoms, more preferably metal salts of fatty acids having 3 or more and 30 or less carbon atoms, even more preferably metal salts of fatty acids having 12 or more and 30 or less carbon atoms. Also usable are metal salts of dimer acids or trimer acids of the above-mentioned fatty acids, as well as metal salts of dicarboxylic acids having 3 or more and 30 or less carbon atoms. As metal salts of carboxylic acids, preferred are metal salts of fatty acids having 12 or more and 30 or less carbon atoms and metal salts of dicarboxylic acids having 3 to 30 carbon atoms. The metal to constitute the metal salts is preferably an alkali metal or an alkaline earth metal and is more preferably an alkali metal.

In addition to the above-mentioned extreme pressure agents, other examples thereof also usable herein are sulfur-containing extreme pressure agents such as sulfurized oils and fats, sulfurized fatty acids, sulfurized esters, sulfurized olefins, dihydrocarbyl polysulfides, thiocarbamates, thioterpenes, dialkylthio dipropionates.

One alone of these extreme pressure agents may be used or two or more thereof may be used in combination.

The content of the extreme pressure agent is, from the viewpoint of lubricity and stability, preferably 0.001% by mass or more relative to the total amount of the refrigerator oil, more preferably 0.005% by mass or more, and is preferably 5% by mass or less, more preferably 3% by mass or less.

Examples of the acid scavenger include an epoxy compound, such as phenyl glycidyl ether, an alkyl glycidyl ether, an alkylene glycol glycidyl ether, cyclohexene oxide, an α-olefin oxide, and an epoxidized soybean oil. Above all, from the standpoint of compatibility, phenyl glycidyl ether, an alkyl glycidyl ether, an alkylene glycol glycidyl ether, cyclohexene oxide, and an α-olefin oxide are preferred.

The alkyl group in the alkyl glycidyl ether and the alkylene group in the alkylene glycol glycidyl ether may be branched, and the number of carbon atoms thereof is preferably 3 or more and 30 or less, more preferably 4 or more and 24 or less, and even more preferably 6 or more and 16 or less. One example is 2-ethylhexyl glycidyl ether. The α-olefin oxide is one having a total number of carbon atoms of preferably 4 or more and 50 or less, more preferably 4 or more and 24 or less, and even more preferably 6 or more and 16 or less. The acid scavenger may be used solely, or may be used in combination of two or more thereof.

The content of the acid scavenger is, from the viewpoint of effects and prevention of sludge generation, preferably 0.005% by mass or more relative to the total amount of the refrigerator oil, more preferably 0.05% by mass or more, and is preferably 5% by mass or less, more preferably 3% by mass or less.

In the present embodiment, by incorporating the acid scavenger, the stability of the refrigerator oil can be improved.

Examples of the anti-foaming agent include a silicone-based anti-foaming agent, and a fluorinated silicone-based anti-foaming agent. The content of the anti-foaming agent is preferably 0.005% by mass or more relative to the total amount of the refrigerator oil, more preferably 0.01% by mass or more, and is preferably 2% by mass or less, more preferably 1% by mass or less.

Examples of the oiliness agent include an aliphatic saturated or unsaturated monocarboxylic acid, such as stearic acid, and oleic acid; a polymerized fatty acid, such as a dimer acid, and a hydrogenated dimer acid; a hydroxy fatty acid, such as ricinoleic acid, and 12-hydroxystearic acid; an aliphatic saturated or unsaturated monoalcohol, such as lauryl alcohol, and oleyl alcohol; an aliphatic saturated or unsaturated monoamine, such as stearylamine, and oleylamine; an aliphatic saturated or unsaturated monocarboxylic acid amide, such as lauric acid amide, and oleic acid amide; a partial ester of a polyhydric alcohol, such as glycerin or sorbitol and an aliphatic saturated or unsaturated monocarboxylic acid.

One alone of these may be used, or two or more kinds thereof may be used in combination. The content of the oiliness agent is preferably 0.01% by mass or more relative to the total amount of the refrigerator oil, more preferably 0.1% by mass or more, and is preferably 10% by mass or less, more preferably 5% by mass or less.

Examples of the oxygen scavenger include a sulfur-containing aromatic compound, such as 4,4'-thiobis(3-methyl-6-tert-butylphenol), diphenyl sulfide, dioctyldiphenyl sulfide, a dialkyldiphenylene sulfide, benzothiophene, dibenzothiophene, phenothiazine, benzothiapyrane, thiapyrane, thianthrene, dibenzothiapyrane, and diphenylene disulfide; an aliphatic unsaturated compound, such as various olefins, dienes, and trienes; and a terpene compound having a double bond.

Examples of the metal deactivator include a N-[N,N'-dialkyl(alkyl group having 3 to 12 carbon atoms)aminomethyl]triazole.

Examples of the rust inhibitor include a metal sulfonate, an aliphatic amine compound, an organic phosphite ester, an organic phosphate ester, an organic sulfonic acid metal salt, an organic phosphoric acid metal salt, an alkenyl succinate ester, and a polyhydric alcohol ester.

The refrigerator oil may further contain various other known additives than those mentioned above within the range where the object of the present invention is not impaired.

The kinematic viscosity at 40°C of the refrigerator oil is, from the viewpoint of preventing the refrigerator oil from leaking out between lubricated members, preferably 0.40 mm²/s or more, more preferably 0.70 mm²/s or more, even more preferably 1.00 mm²/s or more, and further more preferably 1.50 mm²/s or more, and especially more preferably 2.00 mm²/s or more. The kinematic viscosity at 40°C of the refrigerator oil is, from the viewpoint of energy saving, preferably 8.00 mm²/s or less, more preferably 7.00 mm²/s or less, even more preferably 5.00 mm²/s or less, further more preferably 4.00 mm²/s or less, further more preferably 3.50 mm²/s or less, and especially more preferably 3.00 mm²/s or less.

The flash point of the refrigerator oil is preferably 21°C or higher, more preferably 45°C or higher, even more preferably 80°C or higher, further more preferably 90°C or higher, further more preferably 100°C or higher, and especially more preferably 110°C or higher.

In this description, the value of the kinematic viscosity at 40°C and the value of the flash point of the refrigerator oil are values measured according to the methods described in the section of Examples given later. Regarding the value of the flash point, as a result of measurements, the flash point higher than 79°C is a value measured according to JIS K2265-4:2007 and the flash point of 79°C or lower is a value measured according to JIS K2265-1.

The refrigerator oil is used in refrigerant environments and, specifically, this is mixed with a refrigerant to be mentioned below, and is used in refrigerators. Specifically, the refrigerator oil is used in a refrigerator in the form of a refrigerator composition therein. The refrigerator oil of the present invention has excellent friction characteristics though having a low viscosity, and can be therefore more favorably used as a refrigerator oil for cold storage chambers. In addition, the refrigerator oil is further favorably used in refrigerators using a hydrocarbon-based refrigerant to be mentioned below, and is more further favorably used in cold storage chambers using a hydrocarbon-based refrigerant.

### [Method for producing refrigerator oil]

A method for producing the refrigerator oil of one aspect of the present invention is for producing a refrigerator oil by blending at least the component (B) a polyphosphate ester-based compound and the component (C) a dissolution aid for the component (B), in the above-mentioned component (A) a mineral oil having a kinematic viscosity at 40°C of 0.50 mm²/s or more and 8.00 mm²/s or less. Regarding the order of blending these components, preferably, the component (B) is first blended with the component (C) and then these are blended with the component (A). In that order, the component (B) can be readily dissolved in the refrigerator oil.

In the method, one or more of the above-mentioned other additives may be blended in addition to the component (B) and the component (C). The detailed description of the component (A), the component (B), the component (C) and other additives is the same as that given hereinabove, and is omitted here.

### [Refrigerator oil composition]

The refrigerator oil composition of one aspect of the present invention contains a refrigerant and the above-mentioned refrigerator oil.

### <Refrigerant>

The refrigerant includes one or more selected from the group consisting of a fluorinated hydrocarbon and, as a natural refrigerant, a hydrocarbon-based refrigerant, carbon dioxide and ammonia. Among these, at least one selected from the group consisting of a hydrocarbon-based refrigerant, carbon dioxide and ammonia is preferred, and a hydrocarbon-based refrigerant is more preferred.

In the refrigerator oil composition, as for the use amounts of the refrigerant and the refrigerator oil, a mass ratio of the refrigerant to the refrigerator oil is in a range of preferably 99/1 to 10/90, and more preferably 95/5 to 30/70. When the mass ratio of refrigerant/refrigerator oil falls within the aforementioned range, refrigeration capability and lubricating properties in the refrigerator can be made appropriate.

### <Fluorinated hydrocarbon refrigerant>

The fluorinated hydrocarbon refrigerant includes a saturated fluorinated hydrocarbon compound (HFC) and an unsaturated fluorinated hydrocarbon compound (HFO).

The saturated fluorinated hydrocarbon compound is preferably a fluoride of an alkane having 1 or more and 4 or less carbon atoms, more preferably a fluoride of an alkane having 1 or more and 3 or less carbon atoms, and even more preferably a fluoride of an alkane having 1 or more and 2 or less carbon atoms (methane or ethane). Specifically, examples of the fluoride of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125). Of those, difluoromethane and 1,1,1,2,2-pentafluoroethane are preferred.

Such a saturated fluorinated hydrocarbon compound may be used solely, or may be used in combination of two or more thereof. Examples of the case of using two or more of saturated fluorinated hydrocarbon compounds in combination include a mixed refrigerant of two or more of saturated fluorinated hydrocarbon compounds having 1 or more and 3 or less carbon atoms; and a mixed refrigerant of two or more of saturated fluorinated hydrocarbon compounds having 1 or more and 2 or less carbon atoms.

Specific examples of the mixed refrigerant include a mixture of R32 and R125 (R410A), a mixture of R125, R143a, and R134a (R404A), a mixture of R32, R125, and R134a (e.g., R407A, R407C, R407E), a mixture of R125 and R143a (R507A), and the like.

Examples of the unsaturated fluorinated hydrocarbon compound include those having a carbon-carbon double bond, such as a fluoride of a chain olefin having 2 or more and 6 or less carbon atoms that is a straight-chain or branched, a fluoride of a cyclic olefin having 4 or more and 6 or less carbon atoms, etc.

More specifically, examples thereof include an ethylene having 1 to 3 fluorine atoms introduced thereinto, a propene having 1 or more and 5 or less fluorine atoms introduced thereinto, a butene having 1 or more and 7 or less fluorine atoms introduced thereinto, a pentene having 1 or more and 9 or less fluorine atoms introduced thereinto, a hexene having 1 or more and 11 or less fluorine atoms introduced thereinto, a cyclobutene having 1 or more and 5 or less fluorine atoms introduced thereinto, a cyclopentene having 1 to 7 fluorine atoms introduced thereinto, a cyclohexene having 1 or more and 9 or less fluorine atoms introduced thereinto, and the like.

Of those unsaturated fluorinated hydrocarbon compounds, a fluoride of propene is preferred, a propene having 3 or more and 5 or less fluorine atoms introduced thereinto is more preferred, and a propene having 4 fluorine atoms introduced thereinto is still more preferred. Specifically, 1,3,3,3-tetrafluoropropene (HFO1234ze) and 2,3,3,3-tetrafluoropropene (HFO1234yf) are exemplified as a preferred compound.

Such an unsaturated fluorinated hydrocarbon compound may be used solely, or may be used in combination of two or more thereof, and it may be used in combination with other refrigerant than the unsaturated fluorinated hydrocarbon compound. Here, examples of the case of using a combination with other refrigerant than the unsaturated fluorinated hydrocarbon compound include a mixed refrigerant of a saturated fluorinated hydrocarbon compound and an unsaturated fluorinated hydrocarbon compound. Specific examples of the mixed refrigerant include a mixed refrigerant of R-32, HFO1234ze, and R152a (such as AC5; a mixing ratio is 13.23/76.20/9.96) and the like.

### <Natural Refrigerant>

Examples of the natural refrigerant include a hydrocarbon-based refrigerant, carbon dioxide (carbonic acid gas), and ammonia, and a hydrocarbon-based refrigerant is preferred. Such a natural refrigerant may be used solely, or may be used in combination of two or more thereof, and it may be combined with any other refrigerant than the natural refrigerant. Here, examples of the case of using the natural refrigerant in combination with any other refrigerant than the natural refrigerant include a mixed refrigerant with one or more selected from the group consisting of a saturated fluorinated hydrocarbon compound and an unsaturated fluorinated hydrocarbon compound. Specific examples of the mixed refrigerant include a mixed refrigerant of carbon dioxide, HFO1234ze, and R134a (such as AC6; a mixing ratio is 5.15/79.02/15.41).

### [Hydrocarbon-based refrigerant]

The hydrocarbon-based refrigerant is preferably a hydrocarbon having 1 or more and 8 or less carbon atoms, more preferably a hydrocarbon having 1 or more and 5 or less carbon atoms, even more preferably a hydrocarbon having 3 or more and 5 or less carbon atoms. When the carbon number is 8 or less, the boiling point of the refrigerant is not too high and the hydrocarbon of the type is preferred as a refrigerant. The hydrocarbon-based refrigerant includes one or more selected from the group consisting of methane, ethane, ethylene, propane (R290), cyclopropane, propylene, n-butane, isobutane (R600a), 2-methylbutane, n-pentane, isopentane, cyclopentaneisobutane, and normal butane, and one alone of these may be used, or two or more thereof may be used in combination. Among these, propane (R290), cyclopropane, n-butane, and isobutane (R600a) are preferred, and isobutane (R600a) is more preferred. The hydrocarbon alone may be used, or, as mentioned above, the hydrocarbon may be used as a mixed refrigerant as mixed with any other refrigerant than the hydrocarbon-based refrigerant, for example, with a hydrofluorocarbon such as R134a, or ammonia or carbon dioxide.

The friction coefficient of the refrigerator oil composition is preferably 0.30 or less, more preferably 0.20 or less, even more preferably 0.15 or less. The value of the friction coefficient is a value measured according to the method described in the section of Examples given later.

### [Refrigerator]

The refrigerator oil or the refrigerator oil composition is used as filled inside a refrigerator. The refrigerator as referred to herein has a refrigeration cycle constituted of essential components including a compressor, a condenser, an expansion mechanism (e.g., an expansion valve, etc.), and an evaporator, or including a compressor, a condenser, an expansion mechanism, a dryer, and an evaporator. The refrigerator oil is one to be used for lubricating a sliding portion provided in, for example, a compressor, etc.

The sliding portion of the refrigerator is preferably a metal-to-metal sliding portion, and examples of the metal of the sliding portion include iron, a steel material, and the like. The refrigerant oil of the present embodiment is able to reduce the coefficient of friction while improving the wear resistance of an iron-to-iron or steel material-to-steel material sliding portion.

More specifically, the aforementioned refrigerator oil and refrigerator oil composition can be used for, for example, various refrigerator systems, hot water systems, and heating systems, such as a car air conditioner, e.g., an open-type car air conditioner or an electric car air conditioner, or a gas heat pump (GHP), an air conditioner, a fridge, an automatic vending machine, a showcase, a hot water supply machine, and a floor heater.

Among these, the refrigerator oil and the refrigerator oil composition use the component (A) having a low viscosity and contain the component (A) and the component (B), and are therefore excellent in storage stability and also in friction characteristics, and further have a flash point of 21°C or higher, and are therefore favorably used as a refrigerator oil or a refrigerator oil composition for cold storage chambers, and in particular, these are more favorably used as a refrigerator oil and a refrigerator oil composition for cold storage chambers using a hydrocarbon-based refrigerant.

### Examples

The present invention is hereunder more specifically described by reference to Examples, but it should be construed that the present invention is by no means limited by these Examples.

The properties of the constituent components, the refrigerator oil and the refrigerator oil composition were determined according to the following manners.

### [Kinematic viscosity]

The kinematic viscosity was measured using a glass-made capillary viscometer in conformity with JIS K2283:2000.

### [Flash point]

The flash point was measured in conformity with JIS K2265-1:2007 or JIS K2265-4:2007.

### [Storage stability test]

The refrigerator oil obtained in Examples and Comparative Examples was stored in a glass container having a size of 0.1 L, left at -5°C for 1 day, and then the appearance thereof was observed.

The refrigerator oil obtained in Examples and Comparative Examples was left at 25°C for 10 days, and then the appearance thereof was observed. The results are shown in Tables 1 to 8.

The details in the Tables are as shown below. A: "transparent" is excellent in storage stability, and D "separated" is poor in storage stability.
A: "Transparent" state. The component (B) uniformly dissolved in the component (A), and the oil was in a "transparent" state.
B: "Slightly cloudy" state. Dissolution of the component (B) was better than in the "cloudy" state, but the oil was in an extremely slightly cloudy state.
C: "Cloudy" state. Though the component (B) dissolved in the component (A), a part of the component (B) dispersed in the component (A) and the oil was in a slightly cloudy state.
D: "Separated" state. The component (B) did not dissolve in the component (A), and the oil was in a liquid-liquid separated state.

### [Autoclave test]

According to the method described in JIS K2211:2009 Appendix C, the chemical stability between refrigerator oil and refrigerant was evaluated.

As catalysts, iron (Fe), copper (Cu) and aluminum (Al) [all having a diameter of 1.6 mm and a length of 300 mm] were put into a stainless pressure tight case, and sealed up along with 30 g of a refrigerator oil and 30 g of a refrigerant, isobutane (R600a) put thereinto. Next, the sealed pressure tight case was heated at 175°C for 10 days, and checked for the appearance of the refrigerator oil and the appearance of the catalysts therein and for the presence or absence of sludge therein. In addition, the acid value of the refrigerator oil was measured according to the indicator titration method of JIS K2501:2003.

### [JASO pendulum test: measurement of friction coefficient]

According to the "Soda pendulum test" defined in JASO-M314-88 and using a Soda pendulum tester Model (II), the friction coefficient was measured at an oil temperature of 50°C.

### [Falex wear test]

(1) The following pin and block were prepared.
Pin: SAE3135
Block: AISIC1137

### (2) Wear test

Using a Falex tester, the following test was carried out according to ASTM D2670.

The pin and the block were set in a Falex tester, 100 mL of a refrigerator oil as a test sample was introduced into the test chamber, and while an isobutane (R600a) was blown as a refrigerant thereinto at a flow rate of 5 L/h, the tester in which a rotation number of 270 r/min, an oil temperature of 25°C and a load of 1,344 N were set was driven for 1 hour, and the wear amount (mg) of the pin and block was measured. The wear amount in the Tables is a total value of the wear amount of the pin and the block.

### [Examples 1 to 43, and Comparative Examples 1 to 14]

According to the compounding formulation in the following Tables 1 to 10, the constituent components shown in Tables 1 to 10 were blended in the mineral oil being component (A) to prepare refrigerator oils of Examples and Comparative Examples containing the component (A) and the constituent components. According to the above-mentioned evaluation methods, the refrigerator oils of Examples and Comparative Examples were evaluated. The results are shown in the following Tables 1 to 10.

The constituent components in the following Tables 1 to 10 are shown below.

### <Component (A): mineral oil>

Mineral oil 1: 40°C kinematic viscosity 2.13 mm²/s, flash point 102°C
Mineral oil 2: 40°C kinematic viscosity 3.26 mm²/s, flash point 120°C
Mineral oil 3: 40°C kinematic viscosity 4.56 mm²/s, flash point 148°C
Mineral oil 4: 40°C kinematic viscosity 0.75 mm²/s, flash point 48°C
Mineral oil 5: 40°C kinematic viscosity 0.28 mm²/s, flash point 18°C

### <Component (B): polyphosphate ester-based compound>

Polyphosphate ester-based compound 1: compound of the general formula (5) where n is 1.
Polyphosphate ester-based compound 2: mixed compound of the general formula (5) where n is 1 to 8.
Polyphosphate ester-based compound 3: compound of the general formula (6).
Polyphosphate ester-based compound 4: mixed compound of the general formula (1) where R¹, R³, R⁵ and R⁷ are hydrogen atoms, R², R⁴, R⁶ and R⁸ each are an alkyl group having 1 or more and 20 or less carbon atoms, R⁹ is a divalent hydrocarbon group having 2 or more and 20 or less carbon atoms, and n is 1 to 8.

### <Component (C): dissolution aid for component (B)>

PAG1: polypropylene glycol dimethyl ether (40°C kinematic viscosity 5.2 mm²/s)
PAG2: polypropylene glycol monobutyl ether (40°C kinematic viscosity 5.4 mm²/s)
PVE: polyethyl vinyl ether (40°C kinematic viscosity 3.8 mm²/s)
POE: pentaerythritol octanoic acid (C8 acid) nonanoic acid (C9 acid) ester (molar ratio of C8 acid/C9 acid, 1/1.1, 40°C kinematic viscosity 8.5 mm²/s)
AB: alkylbenzene (branched, 40°C kinematic viscosity 4.5 mm²/s)

### <Other additives>

Antioxidant: 2,6-di-tert-butyl-4-methylphenol (DBPC)
Extreme pressure agent: tricresyl phosphate (TCP)
Acid scavenger: 2-ethylhexyl glycidyl ether

**Table 1**

| | | | unit | Example 1 | Example 2 | Example 3 | Example 4 | Example 5 | Comparative 1 |
|---|---|---|---|---|---|---|---|---|---|
| Blending Formulation | Component (A) | Mineral Oil 1 | mass% | 89.6 | 93.6 | 95.6 | 97.6 | 98.6 | 99.6 |
| | Component (B) | Polyphospha te ester-based compound 1 | mass% | 0.4 | 0.4 | 0.4 | 0.4 | 0.4 | 0.4 |
| | Component (C) | PAG1 | mass% | 10 | 6 | 4 | 2 | 1 | - |
| | Total | | mass% | 100 | 100 | 100 | 100 | 100 | 100 |
| | Mass Ratio [(C)/(A)] | | - | 0.11 | 0.06 | 0.04 | 0.02 | 0.01 | - |
| | Mass Ratio [(C)/(B)] | | - | 25 | 15 | 10 | 5 | 3 | - |
| Properties | 40°C Kinematic Viscosity | | mm²/s | 2.30 | 2.23 | 2.19 | 2.16 | 2.14 | 2.13 |
| | Flash Point | | °C | 115 | 110 | 108 | 105 | 103 | 102 |
| | Storage Stability | Oil Appearance (-5°C, after one day) | - | A | A | A | A | C | D |
| | | Oil Appearance (25°C, after 10 days) | - | A | A | A | A | B | D |

**Table 2**

| | | | unit | Example 6 | Example 7 | Example 8 | Example 9 | Example 10 | Comparative Example 2 |
|---|---|---|---|---|---|---|---|---|---|
| Blending Formulation | Component (A) | Mineral Oil 1 | mass% | 79.2 | 87.2 | 91.2 | 95.2 | 97.2 | 99.2 |
| | Component (B) | Polyphosphate ester-based compound 1 | mass% | 0.8 | 0.8 | 0.8 | 0.8 | 0.8 | 0.8 |
| | Component (C) | PAG1 | mass% | 20 | 12 | 8 | 4 | 2 | - |
| | Total | | mass% | 100 | 100 | 100 | 100 | 100 | 100 |
| | Mass Ratio [(C)/(A)] | | - | 0.25 | 0.14 | 0.09 | 0.04 | 0.02 | - |
| | Mass Ratio [(C)/(B)] | | - | 25 | 15 | 10 | 5 | 3 | - |
| Properties | 40°C Kinematic Viscosity | | mm²/s | 2.48 | 2.33 | 2.26 | 2.20 | 2.17 | 2.14 |
| | Flash Point | | °C | 120 | 115 | 111 | 108 | 105 | 102 |
| | Storage Stability | Oil Appearance (-5°C, after one day) | - | A | A | A | A | C | D |
| | | Oil Appearance (25°C, after 10 days) | - | A | A | A | A | B | D |

**Table 3**

| | | | unit | Example 11 | Example 12 | Example 13 | Example 14 | Example 15 | Comparative Example 3 |
|---|---|---|---|---|---|---|---|---|---|
| Blending Formulation | Component (A) | Mineral Oil 1 | mass% | 58.4 | 74.4 | 82.4 | 90.4 | 94.4 | 98.4 |
| | Component (B) | Polyphosphate ester-based compound 1 | mass% | 1.6 | 1.6 | 1.6 | 1.6 | 1.6 | 1.6 |
| | Component (C) | PAG1 | mass% | 40 | 24 | 16 | 8 | 4 | - |
| | Total | | mass% | 100 | 100 | 100 | 100 | 100 | 100 |
| | Mass Ratio [(C)/(A)] | | - | 0.68 | 0.32 | 0.19 | 0.09 | 0.04 | - |
| | Mass Ratio [(C)/(B)] | | - | 25 | 15 | 10 | 5 | 3 | - |
| Properties | 40°C Kinematic Viscosity | | mm²/s | 2.94 | 2.57 | 2.41 | 2.27 | 2.21 | 2.15 |
| | Flash Point | | °C | 126 | 123 | 117 | 111 | 108 | 102 |
| | Storage Stability | Oil Appearance (-5°C, after one day) | - | A | A | A | A | C | D |
| | | Oil Appearance (25°C, after 10 days) | - | A | A | A | A | B | D |

**Table 4**

| | | | unit | Example 16 | Example 17 | Example 18 | Example 19 | Example 20 | Comparative Example 4 |
|---|---|---|---|---|---|---|---|---|---|
| Blending Formulation | Component (A) | Mineral Oil 1 | mass% | 79.2 | 87.2 | 91.2 | 95.2 | 97.2 | 99.2 |
| | Component (B) | Polyphosphate ester-based compound 1 | mass% | 0.8 | 0.8 | 0.8 | 0.8 | 0.8 | 0.8 |
| | Component (C) | PAG2 | mass% | 20 | 12 | 8 | 4 | 2 | - |
| | Total | | mass% | 100 | 100 | 100 | 100 | 100 | 100 |
| | Mass Ratio [(C)/(A)] | | - | 0.25 | 0.14 | 0.09 | 0.04 | 0.02 | - |
| | Mass Ratio [(C)/(B)] | | - | 25 | 15 | 10 | 5 | 3 | - |
| Properties | 40°C Kinematic Viscosity | | mm²/s | 2.50 | 2.34 | 2.27 | 2.20 | 2.16 | 2.14 |
| | Flash Point | | °C | 123 | 117 | 112 | 109 | 105 | 102 |
| | Storage Stability | Oil Appearance (-5°C, after one day) | - | A | A | A | A | B | D |
| | | Oil Appearance (25°C, after 10 days) | - | A | A | A | A | A | D |

**Table 5**

| | | | unit | Example 21 | Example 22 | Example 23 | Example 24 | Example 25 | Comparative Example 5 |
|---|---|---|---|---|---|---|---|---|---|
| Blending Formulation | Component (A) | Mineral Oil 2 | mass% | 79.2 | 87.2 | 91.2 | 95.2 | 97.2 | 99.2 |
| | Component (B) | Polyphosphate ester-based compound 2 | mass% | 0.8 | 0.8 | 0.8 | 0.8 | 0.8 | 0.8 |
| | Component (C) | PVE | mass% | 20 | 12 | 8 | 4 | 2 | - |
| | Total | | mass% | 100 | 100 | 100 | 100 | 100 | 100 |
| | Mass Ratio [(C)/(A)] | | - | 0.25 | 0.14 | 0.09 | 0.04 | 0.02 | - |
| | Mass Ratio [(C)/(B)] | | - | 25 | 15 | 10 | 5 | 3 | - |
| Properties | 40°C Kinematic Viscosity | | mm²/s | 3.36 | 3.32 | 3.30 | 3.28 | 3.27 | 3.26 |
| | Flash Point | | °C | 135 | 130 | 128 | 125 | 121 | 120 |
| | Storage Stability | Oil Appearance (-5°C, after one day) | - | A | A | A | A | C | D |
| | | Oil Appearance (25°C, after 10 days) | - | A | A | A | A | B | D |

**Table 6**

| | | | unit | Example 26 | Example 27 | Example 28 | Example 29 | Example 30 | Comparative Example 6 |
|---|---|---|---|---|---|---|---|---|---|
| Blending Formulation | Component (A) | Mineral Oil 3 | mass% | 79.2 | 87.2 | 91.2 | 95.2 | 97.2 | 99.2 |
| | Component (B) | Polyphosphate ester-based compound 3 | mass% | 0.8 | 0.8 | 0.8 | 0.8 | 0.8 | 0.8 |
| | Component (C) | POE | mass% | 20 | 12 | 8 | 4 | 2 | - |
| | Total | | mass% | 100 | 100 | 100 | 100 | 100 | 100 |
| | Mass Ratio [(C)/(A)] | | - | 0.25 | 0.14 | 0.09 | 0.04 | 0.02 | - |
| | Mass Ratio [(C)/(B)] | | - | 25 | 15 | 10 | 5 | 3 | - |
| Properties | 40°C Kinematic Viscosity | | mm²/s | 5.11 | 4.88 | 4.77 | 4.67 | 4.61 | 4.57 |
| | Flash Point | | °C | 170 | 165 | 159 | 153 | 149 | 148 |
| | Storage Stability | Oil Appearance (-5°C, after one day) | - | A | A | A | A | C | D |
| | | Oil Appearance (25°C, after 10 days) | - | A | A | A | A | C | D |

**Table 7**

| | | | unit | Example 31 | Example 32 | Example 33 | Example 34 | Example 35 | Comparative Example 7 |
|---|---|---|---|---|---|---|---|---|---|
| Blending Formulation | Component (A) | Mineral Oil 4 | mass% | 79.2 | 87.2 | 91.2 | 95.2 | 97.2 | 99.2 |
| | Component (B) | Polyphosphate ester-based compound 4 | mass% | 0.8 | 0.8 | 0.8 | 0.8 | 0.8 | 0.8 |
| | Component (C) | AB | mass% | 20 | 12 | 8 | 4 | 2 | - |
| | Total | | mass% | 100 | 100 | 100 | 100 | 100 | 100 |
| | Mass Ratio [(C)/(A)] | | - | 0.25 | 0.14 | 0.09 | 0.04 | 0.02 | - |
| | Mass Ratio [(C)/(B)] | | - | 25 | 15 | 10 | 5 | 3 | - |
| Properties | 40°C Kinematic Viscosity | | mm²/s | 0.95 | 0.86 | 0.82 | 0.78 | 0.77 | 0.76 |
| | Flash Point | | °C | 55 | 53 | 51 | 50 | 49 | 48 |
| | Storage Stability | Oil Appearance (-5°C, after one day) | - | A | A | A | A | B | D |
| | | Oil Appearance (25°C, after 10 days) | - | A | A | A | A | A | D |

**Table 8**

| | | | unit | Comparative Example 8 | Comparative Example 9 | Comparative Example 10 | Comparative Example 11 | Comparative Example 12 | Comparative Example 13 |
|---|---|---|---|---|---|---|---|---|---|
| Blending Formulation | Component (A) | Mineral Oil 5 | mass% | 79.2 | 87.2 | 91.2 | 95.2 | 97.2 | 99.2 |
| | Component (B) | Polyphosphate ester-based compound 1 | mass% | 0.8 | 0.8 | 0.8 | 0.8 | 0.8 | 0.8 |
| | Component (C) | PAG1 | mass% | 20 | 12 | 8 | 4 | 2 | - |
| | Total | | mass% | 100 | 100 | 100 | 100 | 100 | 100 |
| | Mass Ratio [(C)/(A)] | | - | 0.25 | 0.14 | 0.09 | 0.04 | 0.02 | - |
| | Mass Ratio [(C)/(B)] | | - | 25 | 15 | 10 | 5 | 3 | - |
| Properties | 40°C Kinematic Viscosity | | mm²/s | 0.35 | 0.32 | 0.31 | 0.30 | 0.29 | 0.28 |
| | Flash Point | | °C | 20 | 20 | 19 | 19 | 18 | 18 |
| | Storage Stability | Oil Appearance (-5°C, after one day) | - | A | A | A | A | A | D |
| | | Oil Appearance (25°C, after 10 days) | - | A | A | A | A | A | D |

**Table 9**

| | | | unit | Example 36 | Example 37 | Example 38 | Example 39 | Example 40 | Example 41 |
|---|---|---|---|---|---|---|---|---|---|
| Blending Formulation | Component (A) | Mineral Oil 1 | mass% | 76.2 | 76.2 | 76.2 | 56.2 | 36.2 | 16.2 |
| | Component (B) | Polyphosphate ester-based compound 1 | mass% | 0.8 | - | - | - | - | - |
| | | Polyphosphate ester-based compound 2 | mass% | - | 0.8 | - | - | - | - |
| | | Polyphosphate ester-based compound 3 | mass% | - | - | 0.8 | 0.8 | 0.8 | 0.8 |
| | Component (C) | PAG1 | mass% | 20 | - | - | - | - | - |
| | | PVE | mass% | - | 20 | - | - | - | - |
| | | POE | mass% | - | - | 20 | 40 | 60 | 80 |
| | Other Additives | Antioxidant | mass% | 1 | 1 | 1 | 1 | 1 | 1 |
| | | Extreme Pressure Agent | mass% | 1 | 1 | 1 | 1 | 1 | 1 |
| | | Acid Scavenger | mass% | 1 | 1 | 1 | 1 | 1 | 1 |
| | Total | | mass% | 100 | 100 | 100 | 100 | 100 | 100 |
| | Mass Ratio [(C)/(A)] | | - | 0.26 | 0.26 | 0.26 | 0.71 | 1.66 | 4.94 |
| | Mass Ratio [(C)/(B)] | | - | 25 | 25 | 25 | 50 | 75 | 100 |
| Properties | 40°C Kinematic Viscosity | | mm²/s | 2.47 | 2.35 | 5.10 | 5.81 | 6.61 | 7.57 |
| | Flash Point | | °C | 123 | 121 | 125 | 133 | 142 | 178 |
| | Autoclave Test Results | Oil Appearance | - | good *1 | good *1 | good *1 | good *1 | pale yellow | yellow |
| | | Catalyst Appearance | - | good *1 | good *1 | good *1 | good *1 | good *1 | Fe discolored |
| | | Sludge Formation | - | no | no | no | no | no | no |
| | | Acid Value | mgKOH/g | 0.01 | 0.01 | 0.01 | 0.01 | 0.03 | 0.12 |

| | | | | | | | | | |
|---|---|---|---|---|---|---|---|---|---|
| *1: "good" means no discoloration. | | | | | | | | | |

**Table 10**

| | | | unit | Example 11 | Example 6 | Example 42 | Example 43 | Comparative 14 |
|---|---|---|---|---|---|---|---|---|
| Blending Formulation | Component (A) | Mineral Oil 1 | mass% | 58.4 | 79.2 | 79.6 | 89.8 | 90.0 |
| | Component (B) | Polyphosphate ester-based compound 1 | mass% | 1.6 | 0.8 | 0.4 | 0.2 | - |
| | Component (C) | PAG1 | mass% | 40 | 20 | 20 | 10 | 10 |
| | Total | | mass% | 100 | 100 | 100 | 100 | 100 |
| | Mass Ratio [(C)/(A)] | | - | 0.68 | 0.25 | 0.25 | 0.11 | 0.11 |
| | Mass Ratio [(C)/(B)] | | - | 25 | 25 | 50 | 50 | - |
| Properties | 40°C Kinematic Viscosity | | mm²/s | 2.94 | 2.48 | 2.47 | 2.29 | 2.28 |
| | Flash Point | | °C | 126 | 120 | 119 | 108 | 108 |
| | JASO pendulum test, friction coefficient | | - | 0.13 | 0.14 | 0.19 | 0.23 | 0.37 |
| | Falex wear test, wear amount | | mg | 0.5 | 0.6 | 1.2 | 4.5 | seizure |

As obvious from the oil appearance observation results of refrigerator oils of Examples 1 to 35, it is confirmed that the solubility of the component (B) in the component (A) was improved when the component (C) was incorporated, and the refrigerator oils therefore have excellent storage stability.

On the contrary, as shown in Comparative Examples 1 to 7 and Comparative Example 13, when not containing the component (C), it is confirmed that the component (A) and the component (B) separated in the oils. The refrigerator oils of Comparative Examples 8 to 12 had a flash point of lower than 21°C.

Further, as shown in Examples 36 to 41, sludge was not observed in the refrigerator oil composition containing the refrigerator oil of one aspect of the present invention and the refrigerant after the autoclave test. Among these, in Examples 36 to 40 where the value of [(C)/(B)] is not more than 80, the chemical stability between the refrigerator oil and the refrigerant was good, the refrigerator oil had little appearance change, the catalysts also had little appearance change, and the acid value was good.

In addition, it is confirmed that the refrigerator oil compositions containing the refrigerator oil of Example 6, 11, 42 or 43, and the refrigerant had a low friction coefficient and were excellent in wear resistance.

On the other hand, the refrigerator oil composition containing the refrigerator oil of Comparative Example 14 and the refrigerant had a high friction coefficient and seizure was occurred in the wear test of the refrigerator oil composition.

### Industrial Applicability

Though containing the component (A) and the component (B), the refrigerator oil of the present invention has excellent storage stability and excellent friction characteristics, and further has a flash point of 21°C or higher, and is therefore favorably used, for example, as a refrigerator oil to be blended in a refrigerator oil composition used for cold storage chambers.

## Claims

1. A refrigerator oil comprising:
(A) a mineral oil having a kinematic viscosity at 40°C of 0.50 mm²/s or more and 8.00 mm²/s or less,
(B) a polyphosphate ester-based compound, and
(C) a dissolution aid for the component (B).

2. The refrigerator oil according to claim 1, wherein the content of the component (B) is 0.1% by mass or more and 10.0% by mass or less relative to the total amount of the refrigerator oil.

3. The refrigerator oil according to claim 1 or 2, wherein the ratio by mass of the content of the component (C) to the content of the component (B) [(C)/(B)] is 2.0 or more and 80 or less.

4. The refrigerator oil according to any one of claims 1 to 3, wherein the ratio by mass of the content of the component (C) to the content of the component (A) [(C)/(A)] is 2.0 or less.

5. The refrigerator oil according to any one of claims 1 to 4, wherein the component (C) is at least one selected from the group consisting of an oxygen-containing organic compound and an aromatic hydrocarbon compound.

6. The refrigerator oil according to any one of claims 1 to 5, wherein the component (C) is at least one selected from the group consisting of poly(oxy)alkylene glycols, polyvinyl ethers, polyol esters, copolymers of a poly(oxy)alkylene glycol or a monoether thereof and a polyvinyl ether, alkylbenzenes, and alkylnaphthalenes.

7. The refrigerator oil according to any one of claims 1 to 6, wherein the component (B) is a compound represented by the following general formula (1): 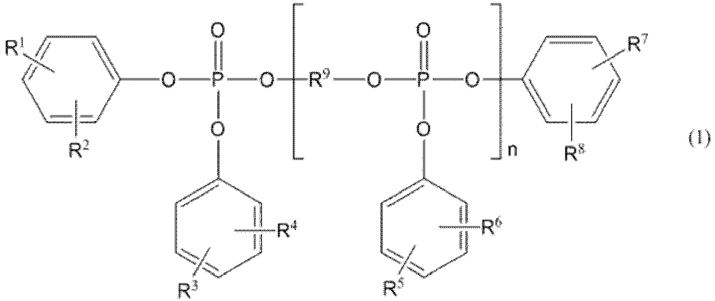 wherein n represents an integer of 1 to 10, R¹ to R⁸ each independently represent a hydrogen atom or an alkyl group having 1 or more and 20 or less carbon atoms, and R⁹ represents a divalent hydrocarbon group having 2 or more and 20 or less carbon atoms.

8. The refrigerator oil according to any one of claims 1 to 7, which has a flash point of 21°C or higher.

9. The refrigerator oil according to any one of claims 1 to 8, which has a kinematic viscosity at 40°C of 0.40 mm²/s or more and 8.00 mm²/s or less.

10. The refrigerator oil according to any one of claims 1 to 9, which is used for cold storage chambers.

11. A refrigerator oil composition containing a refrigerant and the refrigerator oil according to any one of claims 1 to 10.

12. The refrigerator oil composition according to claim 11, wherein the refrigerant is a hydrocarbon-based refrigerant.

13. A method for producing a refrigerator oil, comprising blending at least:
(B) a polyphosphate ester-based compound and
(C) a dissolution aid for the component (B), in
(A) a mineral oil having a kinematic viscosity at 40°C of 0.50 mm²/s or more and 8.00 mm²/s or less.
